Europäisches Patentamt

European Patent Office

Office européen des brevets

(19)

(11) Veröffentlichungsnummer: **0 080 653**
**B1**

(12) **EUROPÄISCHE PATENTSCHRIFT**

(45) Veröffentlichungstag der Patentschrift:
05.02.86

(21) Anmeldenummer: 82110605.1

(22) Anmeldetag: 17.11.82

(51) Int. Cl.⁴: **C 02 F 1/40, B 03 C 1/00**

(54) Verfahren zum Entfernen von Erdöl oder Erdölfraktionen von Wasseroberflächen und eine Vorrichtung zur Durchführung dieses Verfahrens.

(30) Priorität: 26.11.81 DE 3146847

(43) Veröffentlichungstag der Anmeldung:
08.06.83 Patentblatt 83/23

(45) Bekanntmachung des Hinweises auf die Patenterteilung:
05.02.86 Patentblatt 86/6

(84) Benannte Vertragsstaaten:
BE FR GB IT NL SE

(56) Entgegenhaltungen:
AT - B - 334 649
DE - B - 1 225 117
JP - A - 52 021 290

(73) Patentinhaber: Kupczik, Günter, Dipl.-Ing.,
Wittenbergener Weg 18, D-2000 Hamburg 56 (DE)
Patentinhaber: Blechschmidt, Wolfgang, Dipl.-Ing.,
Schenefelder Holt 109, D-2000 Hamburg 55 (DE)

(72) Erfinder: Kupczik, Günter, Dipl.-Ing., Wittenbergener
Weg 18, D-2000 Hamburg 56 (DE)

(74) Vertreter: Kretzschmar, Otto Robert, Dipl.-Ing., Beim
Strohhause 34, D-2000 Hamburg 1 (DE)

## Beschreibung

Die Erfindung betrifft ein Verfahren zu, Entfernen von Erdöl oder Erdölfraktionen von Wasseroberflächen, bei walcham ein saugfähiges, magnetisierbares Bindemittel geringeren spezifischen Gewichtes als Wasser auf die Was seroberfläche aufgebracht und das vollgesaugte Bindemittel mit Hilfe von Magnetkräften entfernt wird.

Ferner bezieht sich die Erfindung auf eine Vorrichtung zur Durchführung des Verfahrens mit einer mit einem Ende im Bereich einer Wasseroberfläche angeordneten, kontinuierlich arbeitenden Heber-und Fördervorrichtung.

Bei der Entfernung von Erdöl und Erdölfraktionen, die sich nach Unfällen auf einer Wasseroberfläche ausbreiten, kommt es darauf an, die dadurch entstehende Verschmutzung so schnell wie möglich zu beseitigen. Hierzu sind Verfahren und Vorrichtungen bekannt geworden, die jedoch alle nicht zufriedenstellend arbeiten bzw. einen außerordentlichen Aufwand mit sich bringen. Dies gilt insbesondere für Vorrichtungen, bei denen das spezielle Gerät für einen aktuellen Fall bereitgehalten werden muß und zwischenzeitlich nicht ausgenutzt werden kann.

Nach der japanischen Patentveröffentlichung 52-21290 ist bekannt, ein Ölsammlungsmittel mit Schleifeisenpulver in Netze zu packen und in das Wasser zu werfen. Nach der Aufnahme der. Netze ist es möglich, das Ölsammlungsmittel zurückzugewinnen und zwar unter Einsatz von Magneten. Die ses Verfahren ist verhältnismäßig aufwendig und unergiebig, auch wenn in diesem Zusammenhang umweltfreundliches Material benutzt wird. .

Auch ist es bekannt bei einer solchen Ausführung, das ölhaltige Ansammlungsmittel mit Elektromagneten oder Vakuum einzusammeln. Auch dieses erfolgt offensichtlich in einer diskontinuierlichen Verfahrensweise, so daß die Effizienz dieses bekannten Verfahrens gering ist.

Die Verwendung einer kontinuierlich arbeitenden Heber-und Fördervorrichtung ist in Form eines umlaufenden, stumpfwinklig unter die Wasseroberfläche tauchenden Förderbandes nach der DE-B-1 225 1 1 7 bekannt. Diese bekannte Ausfüh rung, die schon Schöpfeinrichtungen vorausaetzt und die Nachteile solcher Vorrichtungen insofern erkennt, als sie bei dünnen, aus Ölen oder ähnlichen Stoffen bestehenden Treibschichten erhebliche Wassermengen mitnimmt und vor allem auch das Entstehen eines Flüssigkeitsstaus einbezieht, arbeitet an sich unbefriedigend.

Diese Nachteile werden nun bei der bekannten Ausführung durch die Abstimmung des Eintauchens und der Umlaufrichtung des Förderbandes dadurch berücksichtigt, daß das För derband so geneigt angeordnet ist und derart angetrieben wird, daß das Untertrum des Förderbandes in die Schmutzschicht von oben her kommend eintaucht und die Zugrichtung des Untertrums bei der Reinigung eines fließenden Gewäs sers dessen Fließrichtung gleichgerichtet ist und daß bei der Reinigung eines stehenden Gewässers mittels eines auf einem schwimmfähigen Fahrzeug angeordneten Förderbandes das Fahrzeug derart voranbewegt wird, wobei das in die Schmutzschicht von oben her eintauchende Untertrum des Förderbandes, bezogen auf die Bewegungsrichtung des Fahrzeuges, in der Bewegungsrichtung zuvorderst zu liegen kommt. Diese Maßnahmen sind aber unzureichend, weil sie von unkontrollierbaren Bedingungen, wie der Wasserströmung, der Ölschicht und dergleichen abhängen. Die angesprochene Haftung ist willkürlich.

Dieser bekannten Ausführung wird jedoch auch eine Schaberanordnung an der Oberseite des Förderbandes zugeordnet.

Beispielsweise sind auch Schwimmkörper zum Abnehmen von Öl von einer Wasseroberfläche aus der DE-A-2 721 108 bekannt. Dabei handelt es sich um spezielle komplizierte Geräte, die an die jeweiligen Stellen zu transportieren sind, und die ein Öl-und Wassergemisch aufnehmen, das schon in einem Notfall durch seine Menge eine wirkungs volle Beseitigung der Gefahr durch einen Ölteppich nicht zuläßt. Abgesehen davon, das die komplizierte und aufwendige Vorrichtung im Seegang weitgehend wirkungslos wird.

Entsprechendes gilt auch beispielsweise für eine Vorrichtung nach der DE-A-2 536 828. Diese Vorrichtung ist nur zur Erfassung eines verhältnismäßig kleinen Flächenbereichs in der Lage, wobei obige Probleme zu einer Leistungsbeschränkung führen, die einem Gefahrenfalle nicht gerecht Wird.

Die DE-B-2 407 409 bleibt weiterhin eine Vorrichtung zum Beseitigen von auf einer Wasaeroberfläche schwimmenden Verunreinigungen. Diese Vorrichtung wird als Beispiel für einen auch im Vergleich mit der Leistungsfähigkeit außerordentlichen Aufwand genannt, wobei die obengenannten Einschränkungen auftreten.

Aus diesen Gründen ist bereits versucht worden, Öl durch Besprühung mit Emulgatoren zu beseitigen. Dadurch entsteht allerdings, abgesehen von den kosten, eine Verschmutzung und eine Gefährdung für im Wasser lebende Tiere, so daß auch dieses-Verfahren ungünstig, insbesondere ökologisch nachteilig ist.

Beispielsweise ist aus der DE-A-2 654 909 ein Verfahren bekannt, das auf chemischem Wege arbeitet, um durch eine Aufbereitung eine allmähliche Assimilierung durch Mikroorganismen herbeizuführen. Dieses Verfahren beruht auf einer biologischen Zersetzung. Aber auch in diesem Falle bleiben lange Zeit Giftstoffe bzw. ökologisch nachteilige Stoffe vorhanden.

Dieses gilt auch beim bekannten Adsorbieren von Öl an schwereren Stoffen als Wasser, weil der Boden des Gewässers bedeckt und das sich dort befindende Leben erstickt wird.

Aus der DE-B-2 802 673 ist es auch bekannt, daß das Öl bzw. Ölfraktionen an Stoffen, insbesondere saugfähigen Bindemitteln, adsorbiert wird, die aufgrund geringeren spezifischen Gewichts als Wasser auf der Wasseroberfläche schwimmen, so daß dann eine Abschöpfung mit Abschöpfgeräten erfolgt. In diesem Zusammenhang sind als Bindemittel bereits Stroh, Sägespäne und Torfmull genannt. Diese Stof fe werden für die vorliegende Erfindung einbezogen. In diesem Zusammenhang sind aber zunächst Nachteile hinsichtlich einer lockeren Bindung des Öls angegeben, so daß das verbrauchte Adsorptionsmittel von der Wasseroberfläche entfernt werden Muß. Dabei ergeben sich Probleme bezüglich der Leistungsfähigkeit, auch hinsichtlich der Zeit, weil eben aufgrund der obengenannten Grenzschichtbedin gungen eine Aufnahme durch Schöpfeinrichtungen nicht ohne weiteres möglich ist. Auch ist bekannt, daß eine schnelle Entfernung vielfach wegen des Wellengangs nicht möglich ist. Für Torf ist andererseits der zusätzliche Nachteil anzugeben, daß er sich langsam voll Wasser saugt und dann untergeht. Aber aus der genannten Literaturstelle geht auch hervor, daß bei diesem Verfahren ein sehr großer Transportraum benötigt wird.

Wenn als Bindemittel dann auch Polyurethanschäume oder Polypropylenfasern gennannt sind, dann werden solche Stoffe im Zusammenhang mit der Erfindung einbezogen, die sich auch auf weitere Granulate auf Kunststoffbasis bezieht, obwohl solche Stoffe aus verschiedenen Gründen auch wegen der Halbwertzeit möglichst vermieden werden sollen.

In der DE-B-2 802 673 wird als Adsorptionsmittel feingemahlene Steinkohle vorgeschlagen, die eine besonders günstige Bindung bei bleibender Schwimmfähigkeit gewährlei stet, aber auch die Verwendung von Steinkohle allein hat den Nachteil, daß eine Entfernung von der Wasseroberfläche durch Abschöpfung oder dergleichen wegen der Bindungen zum Wasser weitesgehend wirkunglos bleibt, weil das ölbeladende Adsorptionsmittel in erheblicher Menge jeweils in das Wasser zurückleitet. Es sei denn, daß sehr große Mengen Wasser zugleich mitaufgenommen werden. Dann ergeben sich aber die Probleme des Aufwands und der Leistungsfähigkeit.

Aus der DE-A-2 911 016 ist ein Verfahren bekannt, das Substanzen einsetzt, die eine natürlich ablaufende biologische Zersetzung des Öls oder der entsprechenden Kohlenwasserstoffe beschlcunigen sollen. Hierbei geht es zugegebenermaßen vor allem um bei dem bekannten Abpumpen ver bleibende Rückstände, weil anerkannt wird, daß bekannte Vorrichtungen einen hohen technischen Aufwand mit sich bringen, der aber in der praktischen Anwendung nicht zur vollständigen Erfassung ölhaltigen Wassers in einer verschmutzten Region führt. Für die Rückstände sollen dann Substanzen aufgebracht werden, die die Ober-und Grenzflächenspannung des Systems Öl oder Erdölkohlenwasserstoffe der wässerigen Phase herabsetzen, so daß danach das sich verklumpennde Öl von der Wasseroberfläche entfernt wird. Auch dieses Verfahren ist ökologisch nachtailig. Es beruht weiterhin auf ständig frischer Zuführung von Seuerstoff, was nicht ohne weiteres in Verbindung mit einer Ölschicht durchführbar ist, zumal Strömung oder Wellengang einem Aufbrechen eines Ölteppichs vielfach entgegenwirken. Aber auch bei dem vorgesehenen Abpumpen verdichteten Öls ergeben sich die Nechteile aufgrund der Spannungskräfte zwischen Wasser und Öl, so deß der Arbeitseffekt gering ist und insbesondere nicht zur Beseitigung eines Gefahrenfalles ausreicht.

Diese Nachteile treten auch bei der Aufseugung von Ölen nach der DE-A-2 411 932 auf, bei welchem zur Bindung wasserunlösliches Lignin in Pulverform aufgebracht wird. Wenn überhaupt in diesem Zusemmenhang auch an eine Abschöpfung mit Hilfe engmeschiger Netze oder Siebe gedecht wird, dann kennzeichnet das für einen Notfall eine uneffektive Arbeitsweise. Es wird aber entnommen, daß ein Rückstand alsBrennmaterial verwendbar ist. Auch das wird im Rahmen dar Erfindung einbezogen.

Der Erfindung liegt die Aufgabe zugrunde, ein Verfahren dar eingangs angegebenen Art dahingehend zu verbessern, daß zwar mit einem saugfähigen Bindemittel und dessen Abführung nach Adsorption des Erdöls oder der Erdölfraktionen mit Hilfe von Magnetkräften gearbeitet wird, aber die se Abführung in hervorragender Weise beschleunigt wird, so daü im Gefahrenfalle eine arhöhte Leistungsfähigkeit er reicht wird, wobei ferner eine Vorrichtung ermöglicht wird, die in einfacher und leichtar Ausführung ein verbessertes Ergebnis bei geringem Aufwand erreicht.

Diese Aufgabe wird durch das erfindungsgemäße Verfahren dadurch gelöst, daß die Ölsuspension mittels des mit einem pulverigen, magnetisiarbaren Material durchsetzten Binde mittels kontinuierlich aus dem Bereich der Wasseroberfläche unter Einwirkung eines Magnatfeldes gefördert wird. Diese kontinuierliche Förderung ist ein wesentliches Merk mal, weil dadurch in einem durchgehenden Vorgang ohne Unterbrechung und stauwirkung eine erhebliche Menge des Erd-öls oder der Erdölfraktionen aufgenommen werden kann.

Erst dadurch ist es möglich, im Zusammenhang mit einem Bindemittel mit großer Arbeitsgeschwindigkeit große Verschmutzungsflächen unter Aufnahme großer Ölmengen mit ge-ringstmöglichem Wasservolumen abzufahren und eine effektive Reinigung durchzufßhren. Dieses Ergebnis ist über raschend, wobei weiterhin davon auszugehen ist, daß auch im Zusammenhang mit den Magnetkräften Einflüsse der Wellenbewegungen, die in bekannten Systemen nur nachteilig waren, jetzt förderlich sind, weil eine Zusammenschichtung und ein Zulaufan zur Abförderung verbessert wird.

Bevorzugt wird dabei, daß als saugfähiges Bindemittel ein natürliches Material, insbesondere faserigar Struktur, mit Faserlänge in der Größenordnung einiger mm verwandat und vor der Aufbringung auf die Wasseroberfläche mit Spänen aus magnetisierbarem Material versehen wird und als Gitter für die Partikel aus magnetisierbarem Material diese Partikel auf Abstand hält. Zweckmäßig werden dabei als natürliches Material Torfmull und als magnetisierbares Ma terial unrunde Eisenfeilspäne varwendet. Hiardurch wird unter Vermeidung jeglicher ökologischer Varschmutzung ei ne kontinuierliche Abführung erreicht, wobai bevorzugt wird, daß saugfähiges Bindemittel und magnatisierbares Material im Volumenverhältnis in dar Größenordnung 100 000 : 1 Volumenprozent vermischt werden. Dabei wird für das Volumen, insbesondere des Bindemittels, eine lockere Schichtung einbezogen.

Unter einem anderen Gesichtspunkt ist eine Vermischung im Gewichtsverhältnis bis zu 100 : 1 vorgesehen. In Abhängigkeit von der Materialwahl, sowohl für das Bindemittel als auch für das magnetisierbare Material, kann eine günstige Grenze eingestellt werden. Dabei ist zu berücksichtigen, daß die Trennung von Wasser und Suspension ein Problem ist, daß durch die Erfindung eine tonnenweise Abschöpfung sehr schnell erledigt werden kann, wobei auch kleine Schiffe eine große Leistung erbringen. Bevorzugt wird ein Gewichtsverhältnis, das nur etwas kleiner als 100 : 1 ist. Hinsichtlich des geringen spezifischen Gewichts des Bindemittels ergibt sich ein genügender Auftrieb für die vorhandenen Materialien, d.h. die Belastung durch das magnetisier bare Material ist praktisch vernachlässigbar.

Durch die Verwendung eines natürlichen Materials mit bestimmter Faserlänge und der Eignung als Gitter für die Partikel aus magnetisierbarem Material werden diese in dem saugfähigen Bindemittel verteilter Anordnung gehalten. Damit ergibt sich eine besondere und zusätzliche Funktion des saugfähigen Bindemittels. Es bildet nämlich, insbesondere in faseriger Struktur, als Gitter für die Partikel aus magnetisierbarem Material, insbesondere unrunde Eisen feilspäne in -Größe, einen Abstandshalter für die Eisenfeilspäne, so daß sie nicht unter der Einwirkung der Magnetkräfte aus der Suspension gezogen werden können, sondern jeweils Flächenabschnitte führend beeinflussen.

Das erfindungsgemäße Verfahren schafft somit eine Lösung, die ökologisch einwandfrei und eine Abschöpfung von Verunreinigungen in kurzer Zeit mit leicht bereitgehaltenem Gerät ermöglicht, wobei auch die zu behandelnden Mengen auf das Ausmaß der Verunreinigung beschränkt/sind ,ohne daß in diesem Zusammenhang enorme Mengen anderer Stoffe, wie z.B. Wasser, mitaufgenommen werden müssen, und dann durch Ab scheidungen lange Zeiten in verhältnismäßig komplizierten Anlagen vergehen. Einbezogen wird dabei, daß auch Eisen ein natürliches Material ist, das keine ökologische Bela stung darstellt. Vorbehalten wird jedoch auch die Verwendung anderer partikulierter magnetisierbarer Materialien.

Es kommt auf eine kohäsive Mischung in Verbindung mit dem saugfähigen Material an. Diese Mischung führt zu einer zähflüssigen Masse, die durch die besondere Einlagerung der magnetisierbaren Partikel unter dem Einfluß eines mag netischen Feldes verbessert und schneller handhabbar ist, wobei vor allem durch den Einsatz dieser zusätzlichen Kraft eine Trennung zwischen der Wasserphase und der Ölphase verbessert wird.

Die Vorrichtung zur Durchführung des Verfahrens mit einer kontinuierlich arbeitenden Heber-und Fördervorrichtung ist dadurch gekennzeichnet, daß diese Heber-und Fördervorrichtung mit einer Magnetanordnung versehen ist. Die se Heber-und Fördervorrichtung kann einen Bandförderer einbeziehen, aber auch eine Pumpe, in derem Ansaugstutzen ein sich über die Länge desselben veränderndes Magnetfeld herrscht. Dieses Magnetfeld kann durch eine außen aufgebrachte fremderregte Wicklung erzeugt werden, wobei einbezogen wird, magnetische Wechselfelder oder magnetisch schwankende Felder einzubeziehen, um die Erfassung der mit magnetisierbaren Teilen versehenen Mischung aus saugfähigem Bindemittel und Öl sowie die Freigabe zu beeinflussen. Dabei liegt ein weiteres Merkmal darin, daß diese insbesondere magnetisch wechselbaren oder sich ändernden Einflüsse über die Länge einer Transportstrecke, sei es in einem Ansaugkanal oder auf einem Förderband, verschieden sind.

Bei Anordnung eines stumpfwinklig unter die Wasseroberfläche tauchenden Förderbandes wird bevorzugt, daß dem aus der Wasseroberfläche aufsteigenden Trum eine Magnetanordnung zugeordnet ist. Hierin liegt eine besondere einfache Ausführung der Vorrichtung, die im übrigen leicht zu einer Baugruppe mit den zugehörigen Teilen zusammengefaßt und auf einem Schiff installiert werden kann.

Zweckmäßig ist als Magnetanordnung wenigstens ein fremderregbarer Stabmagnet vorgesehen, mit Achsrichtung parallel zur Förderrichtung und unterhalb des Trums des Förder bandes. Dabei versteht sich, daß mehrere solcher Magnetanordnungen hintereinander oder nebeneinander eingebaut sein können. Es wird nicht ausgeschlossen, auch kammartige Magnetanordnungen mit vorstehenden Polen hinter einem För derband einer Fördereinrichtung vorzusehen.

In einer weiteren zweckmäßigen Ausgestaltung mit einer Schaberanordnung ist eine solche zweckmäßig im Bereich des ablaufenden Trums vorgesehen und darunter ist ein Auffangkanal mit Förderschnecke angeordnet. Dadurch kann nach Mitnahme des mit Öl gesättigten Bindemittels unter Ein wirkung der Magnetkräfte dieses Öl in einer Mulde angelagert oder an einer Abstreifeinrichtung vom Förderband abgeworfen werden, so daß dann ein Abtransport der Masse er folgt, die schon aufgrund der verwendeten, insbesondere natürlichen Materialien, ohne weiteres einer weiteren Verwendung zugeführt werden kann. Hierbei ist insbesondere ein Einsatz als Brennstoff möglich.

Für einen günstigen Einsatz sieht eine weitere Ausgestaltung die Ausführung der Vorrichtung als eine mit Befestigungsmitteln versehene Baugruppe mit einem Traggestell zur Lagerung einer Umlenkrolle und der Magnetanordnung vor, wobei ein Motor-Generator-Aggregat mit Zuleitungen zu ei ner Fremderregungseinrichtung der Magnetanordnung und eine Zuleitung zu einem Antriebsmotor für das Förderband angeordnet sind.

Die Erfindung wird im folgenden anhand von Ausführungsbeispielen beschrieben, die in der Zeichnung dargestellt sind. In der Zeichnung zeigen:

Fig. 1 eine schematische Seitenansicht einer Vorrichtung,

Fig. 2 eine schematische Seitenansicht einer Baueinheit einer Vorrichtung unter Verwendung der Teile nach Fig. 1,

Fig. 3 eine Ansicht der Fig. 2 von rechts ohne Förderband,

Fig. 4 einen Schnitt längs der Linie IV-IV in Fig. 2,

Fig. 5 eine schematische Draufsicht auf eine Ausführungsform einer Magnetanordnung,

Fig. 6 eine Seitenansicht des Magneten in der Magnetanordnung nach Fig. 5,

Fig. 7 eine schematische Seitenansicht der Magnetanordnung mit mehreren Magneten und Ihrer Anschaltung an eine fortlaufend gesteuerte Erregungsanordnung.

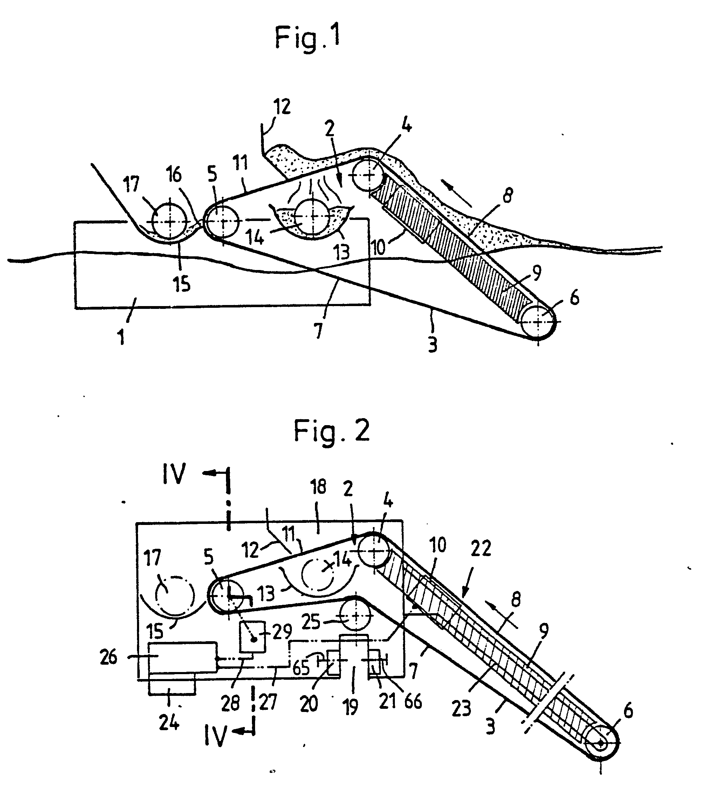

Ein Schwimmkörper 1, gegebenenfalls in Bootsform und auch mit einem Antriebsmotor, der nicht näher dargestellt ist, besitzt ein ebenfalls nicht weiter eingezeichnetes Gestell für eine Fördereinrichtung 2 mit einem Förderband 3 aus einem üblichen Material, beispielsweise Gummi oder Kunststoff. Dieses Förderband 3 ist über drei Umlenkrollen 4-6 geführt, so daß in der Seitenansicht ein im wesentlichen stumpfwinkliges Dreieck vorliegt. Dieses stumpfwinklige Dreieck ist die Grundform für ein Oestell, das auf einer Reling eines Schiffes angebracht werden kann oder neben einem Schwimmkörper, wie in der Fig. 1 gezeigt ist. Es be steht die Möglichkeit, den Trum 7 über/eine im Gestell nach innen gerichtete Umlenkrolle um eine Bewegung über die Reling zu ermöglichen. Auch eine eigenständige Einheit für Wehreinsatz bei ölbekämpfung, beispielsweise durch Feuerwehren, ist vorsehbar. An dieser Stelle wird bemerkt, daß bei einer solchen Ausgestaltung eine fahrbare Ausbildung des Oerätes mit Rädern und Antriebsmotor sowie Lenkeinrichtung einbezogen wird, wobei dieser Einsatz nicht auf dem wasser, sondern auf dem Lande erfolgt. Dies ist hinsichtlich der Darlegung zu berücksichtigen, wenn vorher auf Wasser und im folgenden auf Wasseroberfläche Bezug genommen wird, wobei bei Einsatz an Land dann die diesbezüglichen Teile bis zum Boden geführt sind, während beim Einsatz auf dem Wasser unter die Wasseroberfläche er streckt wird. Dem Stumpfwinklig zur Wasseroberfläche verlaufenden, auf steigenden Trum 8, der über die Rollen 6 und 4 geführt ist, ist, weil er das eigentliche Abschöpfteil darstellt, eine Magnetanordnung 9 zugeordnet. Diese befindet sich an der Rückseite dieses Trums 8, der wegen Anordnung der Umlenkrolle 6 unterhalb der Wasseroberfläche beginnt und bis über die Wassoroberfläche 4 geführt ist. Auch die Umlenkrolle 6, 4 besteht zweckmäßig aus magnetisierbarem Material, so daß die Magnetanordnung, wenn sie nach Art eines Stabmagnets ausgeführt und mit einer Fremderregung 10 durch eine entsprechende Wicklung versehen ist, zur Führung des Magnetfeldes beiträgt, das die magnetische alsuspension beeinflußt, schnell anzieht und fördert. Der sich an die Umlenkwalze 5 anschließende nach unten gerichtete Trum 11 des Förderbandes ist demgegenüber frei von Magnetfeldern, so daß die Masse aus Bindemittel, Öl bzw. Erdölfraktionen und Eisenpulver an einer Schaberanordnung 12 in Form eines im Gestell angeordneten Abschabblechs gestaut und seitlich in einen Auffangkanal 13 ab geworfen werden kann. In diesem Auffangkanal muldenförmigen Querschnitts läuft eine Förderschnecke 14 zur Abfüh rung der aufgenommenen Substanzen zum Abtransport oder zur Weiterverwertung.

Zusätzlich wird im Bereich der Umlenkwalze 5 noch eine weitere Auffangmulde 15 engeordnet, deren dem Förderband 3 zugekehrter Rind 16 als Abschabelement dient, so daß auch in diesem Bereich noch abgenommenes und mitgefördertes Material in die Auffangmulde 15 geführt und durch eine weitere Förderschnecke 17 abtransportiert wird.

Das soweit beschriebene Aggregat kann mit einfachen mechanischen Mitteln zusammengehalten werden. Es bedarf als zusätzliche Baugruppen lediglich eines Antriebsmotors für das Förderband 5, das beispielsweise auf seiner innenliegenden Seite aufgerauht oder verzahnt ist und von aufgerauhten oder verzahnten Walzenoberflächen mitgenommen wird, eines Generators zur Speisung der Fremderregung 10, gege benenfalls in Verbindung mit einstellbaren oder durch eine Steuerung automatisch sich verändernden Steuermitteln, und weiterer Antriebsmotore für die Förderschnecken 14 und 17. Die Energie dafür kann aus Batterien entnommen oder über ein Motorgetriebeaggregat erzeugt oder von einer separaten Quelle über Kabel entnommen werden, wobei die Leistung nicht erheblich ist. Besonders wird aber dabei einbezogen, daß der Antrieb des Förderbandes 4 und auch die Magnetkräfte, dis durch die Fremderregung 10 erzeugt werden, einstellbar sind, um die Geschwindigkeit der Funktion zu erhöhen.

Hierzu wird bemerkt, daß bei der sichergebenden Entfernung oder Abführgeschwindigkeit unter Einwirkung der Magnetkräfte das schwimmende Trägergerät konstruktiv so klein gehalten werden kann, daß es auch von Flugzeugen, insbesondere Hubschraubern, in kürzester Zeit zum Einsatzort transportiert werden kam , wobei sich weiterhin der Vor teil ergibt, daß das magnetisierte Bindemittel, das sehr geringes Gewicht hat, ebenfalls von einem solchen Flugzeug, insbesondere Hubschrauber, aus der Luft auf einen Ölteppich gesprüht werden kann. Diese Maßnahme kann zwingend notwendig werden, wenn von der Basis zum Unfallort große Wegstrecken zurückzulegen sind. Einbezogen wird, daß auch transportable Aggregate möglich sind, die in Tüstfahrzeugen von Feuerwehr, Polizei oder anderen Hilfsdiensten mitgeführt werden können. Dis magnetisierbare Bindemittel läßt sich leicht in geeigneten Tankwagen, welche mit Sprüheinrichtungen versehen sind, zum Einsatzort transportieren und zum Einsatz bringen.

Das Verfahren läßt sich auf vielfache Weise zum Einsatz bringen. So ist auch ein Feuerlöschschiff mit einer derartigen Einrichtung ausrüstbar. Sogar bestehende Einheiten lassen sich nachrüsten. Nahezu alle See-und Hafenschlepper sind mit Einrichtungen versehen, die es möglich machen, auch hier eine Nachrüstung für die Ölbekämpfung nach dem Magnetisierungsverfahren durchzuführen.

Gerade bei der vorbeschriebenen Mischung des Bindemittels mit magnetisierbarem Material, das insbesondere splitterförmig ist, weil es durch Schleif-oder Mahlvorgang hergestellt wird und sich dadurch besonders günstig in faserigem Material festsetzt, ergibt sich auch durch Zügabe eines farbigen und phosphorizierenden Materials ein be sonderer Vorteil, da eine optische Kenntlichmachung der besprühten Fläche bei Tag und Nacht gewährleistet ist. Durch das mit magnetisierbarem Material versehene Bindemittel ist auch die Grundlage gegeben, daß Ölflächen mit tels Radar geortet und dessen Driftung genau beobachtet werden kann. Auch ist die tecnische Basis einer Automatisierung gegeben, wie sie aus dem militärischen Bereich, beispielsweise im Zusammenhang mit Magnetminen , bekannt ist.

Durch die ökologische, freundliche Wirkung der Erfindung ist ein Einsatz nicht nur auf der Tiefsee, sondern auch auf flachen Wassergebieten, insbesondere im Watt oder auf Flüssen und in Häfen, möglich.

Fig. 2 zeigt, unter Verwendung der Teile der Fig. ², eine in sich geschlossene Baugruppe 18 mit einer Ausnemung 19, die auf der Reling eines Schiffes angebracht werden kann und in welcher Befestigungsmittel 20, 21, beispielsweise in Form von Spanneinrichtungen mit Schraubspindeln, vor gesehen sein können. Aus dieser Baugruppe erstreckt sich ein im ganzen mit 22 bezeichneter Träger nach unten, und zwar in bezug zu der durch die Ausnehmung 19 angegebenen Redinghöhe eines Schiffes bis in die Wasseroberfläche, wobei unten an dem Träger 22 mit einem Traggestell 23 die Umlenkrolle 6 gelagert ist. Dieses Traggestell 23 trägt auch die Magnetanordnung 9 unter dem aufsteigenden Trum des Förderbandes 3. Die Tragkonstruktion 23 ist in der Baugruppe 18 fest verankert, die im übrigen weitere Stützund Verankerungsmittel 24 für die Befestigung an Deck oder einem anderen Teil eines Schiffes besitzt. Auch in diesem Zusammenhang können Spannmittel eingesetzt werden.

Innerhalb der Baugruppe sind die Teile 4, 5, 11, 12, 1517 sowie auch 13, 14 der Vorrichtung aus Fig. 1 gelagert. Für das Trum 7 des Förderbandes 3 ist eine zusätzliche Umlenkrolle 25 angeordnet, un die Vorrichtung über die Reding zu führen.

In der Baugruppe befindet sich ferner ein Motor-GeneratorAggregat 26 mit Zuleitungen 27 zu der Fremderregungseinrichtung 10 der Magnetanordnung 9 sowie einer Zuleitung 28 zu einem Antriebsmotor 29 für das Förderband 3, insbe sondere die auch als Antriebsrolle dienende Umlenkwalze 5.

Daraus ist ersichtlich, daß eine als Gestell geschlossene Baueinheit vorliegt, die leicht auf beliebigen Schiffen oder Booten eingesetzt werden kann. Die Wellen oder Achsen sind durch bekannte Lagermittel in den parallel zur Zeichnungsebene verlaufenden, gestellartigen Seitenwänden der gehäuseartig ausgeführten Baugruppe 18 gelagert.

Ein solches Gehäuse kann nach außen flüssigkeitsdicht ausgeführt und im übrigen anstelle von Befestigungsmitteln 20, 21 und Stütz- bzw. Verankerungsmitteln 24 mit Schwimmkörpern ausgeführt sein, so daß ein unmittelbarer Einsatz auf dem Wasser und die Bewegung vermittels eines Zuggeschirres möglich ist. In diesem Zusammenhang körpen die Stütz- und Verankerungsmittel 24 auch zur Befestigung von Schwimmkörpern vorgesehen sein.

Die Förderschnecken 14, 17, bzw. die zugeordneten Auffangkanäle 13 und Auffangmulde 15, sind seitlich der Baugruppe 18 im Bereich einer Seitenwand mit Anschlußmitteln, ins besondere flexiblen Rohrleitungen, versehen, die zu einem angekuppelten oder dageben geschleppten Leichter geführt werden können.

Auch nicht eingezeichnete Motoren der Förderschnecken 14, 17 werden über Zuleitungen von dem Motor-Generator-Aggre-gat 26 angetrieben, abgesehen von der bereits erwähnten Automitisierung des Abziehvorgangs. Dadurch, daß selbststeuernde Vorrichtungen eingebracht werden können, besteht auch ein weiterer Vorteil darin, daß wegen der konzentrierten Abziehung des Öls bzw. der aufgesaugten Ver unreinigung, ohne Mitnahme nennenswerter Wassermengen leichter Transportraum verwendet werden kann. Dies bedeu tet eine Einsatzmöglichkeit von beispielsweise filtbaren Kunststoffbehältern an Land oder Wasser, gegebenenfalls auch zum Einsatz auf Schiffen oder anderen Fahrzeugen mit der Möglichkeit der Zubringung und des Abtransports nach Füllung durch Flugzeuge. Dabei liegt eine günstige Größenordnung in einer Aufnahmekapazität von etwa 1000 bis 2000 m$_3$ in gefülltem Zustand. Bei Einsatz auf dem Wasser können in diesem Zusammenhang in der von Rettungsinseln bekannten Weise sich selbsttätig öffnende, d.h. zum Schwimmkörper auseinanderfaltende Aufnahmebehälter verwendet wer den, die gegebenenfalls von Flugzeugen in der Nähe einer Abschöpfvorrichtung abgeworfen werden.

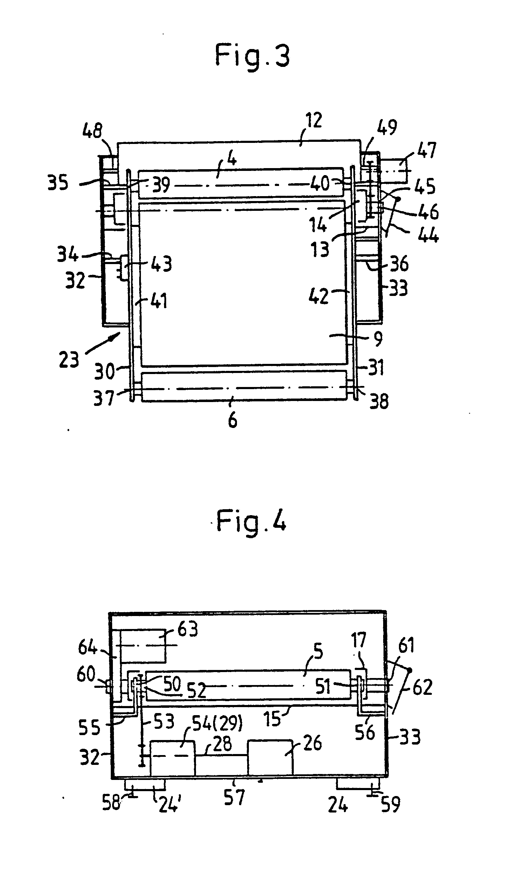

Die folgenden Fig. 3 7 sind einerseits zur Erläuterung der Fig. 1 und 2 und andererseits auch zur Erläuterung obiger Ausführungen, insbesondere hinsichtlich der Magnetanordnung, vorgesehen.

Fig. 3 zeigt eine Stirnansicht von Fig. 2 von rechts gesehen, wobei das Förderband 3 entfernt ist. Dabei ist erkennbar, daß die Tragkonstruktion 23 zwei Arme 30, 31 besitzt, die in Wandteilen 32, 33 der Baugruppe 18 durch Träger 34, 35, bzw. 36 festgelegt sind. In den beiden Armen 30, 31 sind Lagermittel 37, 38 für die Umlenkrolle 6 und 39, 40 für die Umlenkrolle 4 angeordnet. Ferner ist in den Armen 30, 31 mittels Halteeinrichtungen 4i, 42 die Magnetanordnung 9 befestigt, wobei durch die Halteeinrichtung 4i Anschlußmittel oder Zuleitungen 43 für eine Er-regung der Magnetanordnung ü angeordnet sind. Diese Zuleitungen sind in Fig. 2 mit 27 bezeichnet. Ferner ist in Fig. 3 der rechts herausgeführte und sich beidseitig über die Tragkonstruktion 23 hinauserstreckende Auffangkanal l3 mit einer rechts nach unten gerichteten Abgabeöffnung 44 erkennbar, in dem die Förderschnecke i4 durch Lagermittel 45 (nur einseitig gezeigt) abgestützt ist. Im Bereich der Lagermittel 45 greift an die Förderschneckenwelle 46 ein Antriebs-Getriebe-Motor 47 an, der in der Seitenwand 33 gelagert ist. Entsprechend ist in Fig. 3 der obere Teil des Abstreifers i2 zu erkennen, der ebenfalls durch Lagermittel 48, 49 in den Seitenwänden festgelegt ist.

Der in Fig. 4 gezeigte Schnitt durch Fig. 2 zeigt innerhalb der Seitenwände 32, 33 die Lagerung 50, 51 der Umlenkwalze 5 sowie einen herausgeführten Wellenzapfen 52, der über ein Vorgelege 53 mit dem Antriebsmotor 54 (29) verbunden ist. Weiterhin ist das Motor-Generator-Aggregat 26 erkennbar und die Zuleitung 28.

Die Lagermittel sind durch Träger 55, 56 in den Seitenwänden 33 des Gestells 18 gehalten, das unten durch den Boden 57 geschlossen ist, an welchem beispielsweise die Verankerungsmittel 24, 24' erkennbar sind. Diese Verankerungsmittel besitzen beispielsweise Spannschrauben 58, 59. Die Befestigungsmittel 20, 21 sind gegebenenfalls mit nach innen gerichteten Schraubenspindeln 65, 66 (Fig. 2) ausgestattet, die in horizontale Gewindebohrungen geführt sind und in der Ausnehmung 19 Klemmköpfe haben.

Weiterhin ist in Fig. 4 die Auffangmulde 15 erkennbar, die in den Seitenwänden festgelegt ist und in welcher die Förderschnecke 17 durch endweise angeordnete Abstützmittel 60, 61 gelagert sind. Die Mulde hat eine Ausgageöffnung 62. Die Förderschnecke i7 ist durch einen Motor 63 angetrieben, und zwar mittels eines Vorgeleges 64, das zu einer aus den Lagermitteln 60 herausgeführten Welle der Förderschnecke führt. Aus den Darlegungen ergibt sich, daß für die Umlenkrolle 25 entsprechend Lagermittel vorgesehen sind, die in den Seitenwänden 32, 33 abgestützt sind, entsprechend der Anordnung der Lagermittel 50 51.

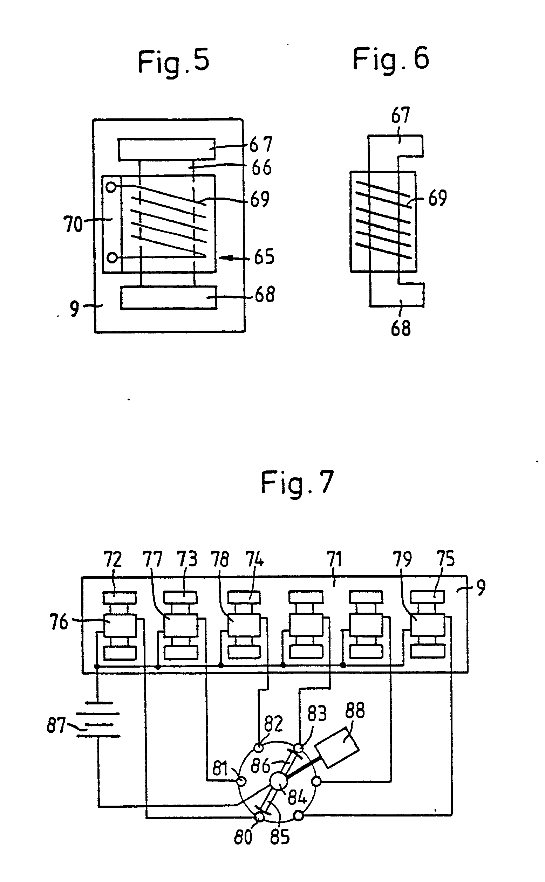

Nach den Fig. 5 und 6 befindet sich in der im ganzen mit 9 bezeichneten Magnetanordnung ein Magnet 65, dessen SchenKel 66 an seinen Enden Polschuhe 67, 68 besitzt, die bezüglich der Fig. i und 2 nach oben, d.h. zum Trum 8 des Förderbandes, gerichtet sind. Auf dem Schenkel befindet sich eine Wicklungsanordnung 69 als Erregungswicklung, die mit einer Anschlußeinrichtung 70 versehen ist. Es versteht sich, daß mehrere solcher Magneten 65 in Förderrichtung des Förderbandes hintereinander und/oder nebeneinander angeordnet sind.

Fig. 7 zeigt unter der Deckplatte 71 der Magnetanordnung 9 eine Anzahl von bezüglich der Förderrichtung quer angeordneten Magneten 72, 73, 74 ... 75, die jeweils mit einer Erregerwicklung 76, 77, 78 ... 79 versehen sind. Jede Er regerwicklung ist an ein Schaltsegment 80, 81, 82 ... 83 eines umlaufenden Schalters 84 angeschlossen, der beispielsweise zwei Schalterarme 85, 86 hat, die einander entgegengerichtet sind. Dadurch werden über die Leistungs quelle 87, in Fig. 2 dargestellt durch das Motor-GeneratorAggregat 26 und die gezeigten Anschlüsse, die Magnete nacheinander erregt, so daß sich in Förderrichtung des Trums 8 eine mitwandernde Welle ergibt. Für den Schalter 84 ist zu diesem Zweck ein besonderer Antriebsmotor 88 vorgesehen, bzw. kann dieser Schalter über ein Vorgelege vom Antriebsmotor 29 angetrieben werden.

## Patentansprüche

1. Verfahren zum Entfernen von Erdöl oder Erdölfraktionen von Wasseroberflächen, bei welchem ein saugfähiges, magnetisierbares Bindemittel geringeren spezifischen Gewichtes als Wasser auf die Wasseroberfläche aufgebracht und das vollgesaugte Bindemittel mit Hilfe von Magnetkräften entfernt wird, dadurch gekennzeichnet, daß die Ölsuspension mittels des mit einem pulverigen, magnetisierbaren Material durchsetzten Bindemittels kontinuierlich aus dem Bereich der Wasseroberfläche unter Einwirkung eines Magnetfeldes gefördert wird.

2. Verfahren nach Anspruch 1, dadurch gekennzeichnet, daß als saugfähiges Bindemittel ein natürliches Material, insbesondere faseriger Struktur, mit Faserlänge in der Größenordnung einiger mm verwendet und vor der Aufbringung auf die Wasseroberfläche mit Spänen aus magnetisierbarem Material versehen wird und als Gitter für die Partikel aus magnetisierbarem Material diese Partikel auf Abstand hält.

3. Verfahren nach Anspruch 2, dadurch gekennzeichnet, daß als natürliches Material Torfmull und als magnetisierbares Material unrunde Eisenfeilspäne verwendet werden.

4. Vorrichtung zur Durchführung des Verfahrens nach einemder Ansprüche 1 bis 3, mit einer mit einem Ende im Bereich einer Wasseroberfläche angeordneten, kontinuierlich arbeitenden Heber-und Fördervorrichtung dadurch gekennzeichnet, daß diese Heber-und Fördervor richtung mit einer Magnetanordnung (9) versehen ist.

5. Vorrichtung nach Anspruch 4, mit einer Pumpe, dadurch gekennzeichnet, daß in derem Ansaugstutzen ein sich über die Länge desselben veränderndes Magnetfeld vorgesehen ist.

6. Vorrichtung nach Anspruch 4, in welcher als Heber und Fördervorrichtung ein umlaufendes, stumpfwinklig unter die Wasseroberfläche tauchendes Förderband (3) vorgesehen ist, dadurch gekennzeichnet, daß dem aus der Wasseroberfläche aufsteigenden Trum (8) eine Mag netanordnung (9) zugeordnet ist.

7. Vorrichtung nach Anspruch 6, dadurch gekennzeichnet, daß als Magnetanordnung (9) wenigstens ein fremderregbarer Stabmagnet vorgesehen ist, mit Achsrichtung parallel zur Förderrichtung und unterhalb des Trums (8) des Förderbandes (3).

8. Vorrichtung nach Anspruch 7, gekennzeichnet durch mehrere solcher Magnetanordnungen hintereinander oder nebeneinander, insbesondere auch kammartige Magnet anordnung mit vorstehenden Polen hinter einem Förderband einer Fördereinrichtung.

9. Vorrichtung nach Anspruch 6, dadurch gekennzeichnet, daß ein außerhalb der Magnetkraft vorgesehenes, nach unten gerichtetes Trum (11) des Förderbandes (3) vorgesehen und zu einer Auffangmulde (15) geführt ist.

10. Vorrichtung nach Anspruch 9, mit einer Schaberanordnung (12, 18) an der Oberseite des Förderbandes, dadurch gekennzeichnet, daß die Schaberanordnung (12, 18) im Bereich des ablaufenden Trums (11) vorgesehen und darunter ein Auffangkanal (13, 15) mit Förderschnecke (14, 17) angeordnet ist.

11. Vorrichtung nach einem der Ansprüche 6 bis 10, gekennzeichnet durch die Ausführung als eine mit Befestigungsmitteln (20 22) versehene Baugruppe (18) mit einem Traggestell (23) zur Lagerung einer Umlenkrolle (6) und der Magnetanordnung (9) und durch die Anordnung eines Motor-Generator-Aggregats (26) mit Zuleitungen (27) zu einer Fremderregungseinrichtung (10) der Magnetanordnung (9) und einer Zuleitung (28) zu einem Antriebsmotor (29) für das Förderband (3).

12. Vorrichtung nach Anspruch 4, gekennzeichnet durch magnetische Wechselfelder oder magnetisch schwankende Felder, insbesondere in verschiedener Ausbildung über die Länge einer Transportstrecke.

**Claims**

1 A process of removing petroleum or petroleum frections from weter surfaces in which en ebsorbent megnetizeble binder heving a lower specific gravity than water is applied to the water surface end the binder which has absorbed to saturation is removed with the aid of magnetic forces, characterized in that the oil suspension is continu oüs1y removed under the action of a magnetic field from the region of the water surface by means of the binder, in which a pulverulent magnetizable material is dispersed.

2. A process according to claim 1, characterized in that an absorbent binder is used which consistsof a natural material which has in particular a fibrous structure having a fiber length of an order of some millimetres and before being applied to the water surface is provided with chips of magnetizable material and as a grid for the particles of magnetizable material holds said particles apart.

3: A process according to claim 2, characterized in that peat dust is used as a natural material and noncircular iron filings are used as a magnetizable material.

4: Apparatus for carrying out the process according to any of claims 1 to 3, comprising continuously operating lifting and conveying means having one end disposed adjacent to a water surface, characterized in that the lifting and conveying means are provided with a magnetic means (9).

5: Apparatus according to claim 4 comprising a pump, characterized in that the suction pipe of the pump con tains a magnetic field, which varies over the length of said pipe.

6. Apparatus according to claim 4, characterized in that the lifting and conveying means comprise a conveyor belt (3), which extends below the water surface, characterized in that magnetic menas (9) are associated with that course (8) which rises from the water surface.

7. Apparatus according to claim 6, characterized in that the magnetic means (9) comprise at least one separately excitable bar magnet having an axis extending parallel to the direction of conveyance and below the course (8) of the conveyor belt (3).

8. Apparatus according to claim 7, characterized by a plurality of such magnetic means arranged one behind the other or one beside the other, particularly by comblike magnetic means comprising projecting poles behind a conveying belt of a conveyor.

9. Apparatus according to claim 6, characterized in that the conveying belt (3) comprises a downwardly directed course (11), which extends outside the magnetic force to a receiving trough (15).

10. Apparatus according to claim 9, comprising scraping means (12, 16) over the conveyor belt, characterized in that the scraping means (12, 16) are provided adjacent to the return course and a collecting channel (13, 15), which contains a feed screw (14, 17), is disposed under the scraping means.

11. Apparatus according to any of claims 6 to 10, characterized in that it comprises a subassembly (18) which is provided with mounting means (20-22), and a carrying frame (23) for movably mounting a reversing pulley (6) and the magnetic means (9), and that a motor-generator set (26) is provided, which is connected by leads (27) to means (10) for a separate excitation of the magnetic means (9) and by a lead (28) to a motor (29) for driving the conveyor belt (3).

12. Apparatus according to claim 4, characterized by the provision of alternating magnetic fields or fluctuating magnetic fields particularly in different configurations over the length of the path of conveyance.

**Revendications**

1.-Procédé pour enlever du pétrole ou des fractions de pétrole de la surface de l'eau, dans lequel on répand sur la surface de l'eau un liant aimantable et pouvant être imbibé, de poids spécifique plus faible que l'eau, et on enleve le liant entierement imprégné à l'aide de forces magnétiques, caractérisé en ce qu'on évacue en continu la suspension de pétrole de la zone de la surface de l'eau au moyen du liant chargé d'un matériau pulvérulent aimantable,sous l'action d'un champ magnétique.

2.-Procédé selon la revendication 1, caractérisé en ce qu'on utilise comme liant pouvant être imbibé une substance naturelle, en particulier à structure fibreuse, présentant une longueur de fibres de l'ordre de quelques mm et qu,on v incorpore des copeaux de matériau aimantabke avant l'épandage sur la surface de l'eau, cette substance naturelle en tant que réseau pour les particules de matériau aimantable maintenant ces particules é;artées. 3.-Procédé selon la revendication 2, caractérisé en ce qu'on utilise comme substance naturelle de la fibre de tourbe et comme matériau aimantable de la limaille de fer de forme irréguliere.

4.-Dispositif pour la mise en oeuvre du procédé selon l'une des revendications 1 à 3, comportant un dispositif de levage et de transport fonctionnant en continu, dont une extrémite est disposée dans la région de la surface de l'eau, carac térisé en ce que ce dispositif de lavage et de transport est muni d'un agencement à aimant (9).

5.-Dispositif selon la revendication 4, comportant une pompe, caractérisé en ce que dans sa tubulure d'entrée est prévu un champ magnétique variant selon la longueur de celle-ci.

6.-Dispositif selon la revendication 4, dans lequel est prévue comme dispositif de levage et de transport une tande transporteuse circulante (3) plongeant à angle obtus sous la surface de l'eau, caractérisé en ce qu'un agencement à aimant (9) est associé au brin (8) s'élevant hors de la surface de l'eau.

7.-Dispositif selon la revendication 6, caractérisé en ce que comme agencement à aimant (9) est prévu au moins un barreau magnétique à excitation extérieure, disposé audessous du brin (8) de la bande transporteuse (3) avec une direction d'axe parallele au'dispositif de transport.

8.-Dispositif selon la revendication 7, caractérisé par plusieurs tels agencements à aimants disposés les uns derriere les autres ou les uns à côté des autres, en particulier aussi un agencement à aimants en peigne à pôles saillants derrière une bande transporteuse d'un dispositif de transport.

9.-Dispositif selon la revendication 6, caractérisé en ce 20 qu'un brin (11) dirigé vers le bas de la bande transpcrteuse (3) est prévu en dehors du champ magnétique e, guidé vers un bac collecteur (15).

10.-Dispositif selon la revendication 9, comportant un agencement de raclage (12,16) sur la face superieure de la bande transporteuse, caractérisé en ce que l'agencement de raclage (12,16) est prévu dans la région du brin descendant (11) et qu'un canal collecteur (13,15) équipé d'une vis transporteuse (14,17) est disposé au-dessous.

11.-Dispositif selon l'une des revendications 6 à 10, caractérisé par la réalisation en tant qu'ensemble (18) muni de moyens de fixation (20-22) et comportant un châssis porteur (23) pour recevoir un rouleau de renvoi (6) et l'agencement à aimant (9) et par la disposition d'un groupe moteur génératrice (26) équipé de conducteurs d'amenée (27) à un dispositif d'excitation extérieur (10) de l'agencement à aimant (9) et d'un conducteur d'amenée (28) à un moteur d'entraînement (29) pour la bande transporteuse (3).

12.-Dispositif selon la revendication 4, caractérisé par des champs magnétiques alternatifs ou fluctuants, en particulier dans une configuration différente selon la longueur d'un trajet de transport.

# Fig.1

# Fig. 2

# Fig.3

# Fig.4

# Fig. 5

# Fig. 6

# Fig. 7